# EUROPÄISCHE PATENTSCHRIFT

(11) **EP 0 675 292 B1**
(45) Veröffentlichungstag und Bekanntmachung des Hinweises auf die Patenterteilung: **16.07.1997**
(21) Anmeldenummer: 95810178.4
(22) Anmeldetag: 17.03.1995
(51) Int. Cl.: F16B 7/04

(54) **Gestell mit wenigstens zwei quer zueinander verlaufenden Hohlprofilstangen**
Frame with at least two mutually perpendicular hollow profile bars
Structure avec au moins deux barres profilées creuses mutuellement perpendiculaires

(30) Priorität: 28.03.1994 CH 927/94
(43) Veröffentlichungstag der Anmeldung: 04.10.1995
(73) Patentinhaber: GEBERIT TECHNIK AG, CH-8645 Jona (CH)
(72) Erfinder: Riehm, Thomas, CH-9642 Ebnat-Kappel (CH)
(74) Vertreter: Groner, Manfred

(56) Entgegenhaltungen:
- WO-A-90/07652
- WO-A-92/21887
- FR-A- 2 454 551
- FR-A- 2 530 937

## Beschreibung

Die Erfindung betrifft ein Gestell mit wenigstens zwei quer zueinander verlaufenden Hohlprofilstangen und wenigstens einem Verbinder, der die beiden Hohlprofilstangen im Abstand zueinander verbindet und der einen Riegelkörper sowie eine Spreizvorrichtung aufweist, wobei der Riegelkörper mit einem Kopfende in eine hinterschnittene Nut der einen Profilstange und mit einem Fussende in einen stirnseitigen Hohlraum der anderen Hohlprofilstange eingreift und wobei durch die Spreizvorrichtung das Kopfende und das Fussende des Riegelkörpers aufgespreizt gehalten sind.

Ein Gestell dieser Art ist durch die EP-A-0 493 319 des Anmelders bekannt. Dieses eignet sich insbesondere für die Montage von Sanitärapparaten. Es hat den besonderen Vorteil, dass beliebig abgelängte Hohlprofilstangen ohne nachträgliche Bearbeitung sehr einfach und schnell lösbar miteinander verbindbar sind. Die bei diesem Gestell vorgesehenen Verbinder weisen eine Spreizvorrichtung auf, die zwei in einem Gehäuse verschiebbar gelagerte Keile umfasst. Diese Keile werden durch Drehen eines zwischen ihnen angeordneten Drehteils auseinander gegen die Enden des Verbinders verschoben und dadurch das Fussende und das Kopfende des Verbinders gespreizt gehalten. Die Keile und der Drehteil sind vergleichsweise aufwendig gestaltet und bedingen einen vergleichsweise grossen Abstand zwischen dem Fuss- und dem Kopfende.

Der Erfindung liegt die Aufgabe zugrunde, ein Gestell der genannten Gattung zu schaffen, das einfacher und kostengünstiger herstellbar ist und das dennoch einfach und sicher montiert werden kann.

Die Aufgabe ist bei einem Gestell der genannten Gattung erfindungsgemäss dadurch gelöst, dass der Riegelkörper klammerförmig ausgebildet ist und die Spreizvorrichtung einen Exzenterbolzen aufweist, der zwischen den beiden Hohlprofilstangen die beiden Schenkel des Klammerförmigen Riegelkörpers quer zu deren Längsrichtung aufspreizt und dadurch jeweils das Kopfende und das Fussende des Riegelkörpers durch Klemmung lösbar mit der zugeordneten Hohlprofilstange verbindet. Bei einem solchen Gestell sind Keile zum Spreizen der Verbinderenden nicht erforderlich, da die Schenkel der Klammern direkt mit einem zwischen diesen angeordneten Exzenterbolzen gespreizt werden.

Eine besonders verschiebungssichere Fixierung der Kopfenden der Verbinder in der entsprechenden Nut ergibt sich dann, wenn am Exzenterbolzen eine Nase angeordnet ist, die formschlüssig in eine Profilierung der Nut eingreift. Nach einer Weiterbildung der Erfindung weisen die beiden Schenkel der Klammer Profilierungen auf, die formschlüssig mit entsprechenden Profilierungen der Hohlprofilstangen in Eingriff sind.

Ein wesentlicher Vorteil des erfindungsgemässen Gestells wird darin gesehen, dass die Verbindung zwischen benachbarten Hohlprofilstangen wesentlich einfacher ist als beim bekannten Gestell. Der Abstand zwischen benachbarten Stangen kann im wesentlichen gleich dem Durchmesser des Exzenterbolzens, und somit kürzer als bisher sein.

Die Erfindung betrifft zudem einen Verbinder für ein Gestell nach Anspruch 1.

Weitere vorteilhafte Merkmale ergeben sich aus den abhängigen Patentansprüchen, der nachfolgenden Beschreibung sowie der Zeichnung. Ein Ausführungsbeispiel der Erfindung wird nachfolgend anhand der Zeichnung näher erläutert. Es zeigen:
- Fig. 1: einen Abschnitt eines erfindungsgemässen Gestells,
- Fig. 2: eine Teilansicht des Gestells gemäss Fig. 1,
- Fig. 3: schematisch das Fügen eines Verbinders mit zwei quer zueinander verlaufenden Hohlprofilstangen,
- Fig. 4: eine Ansicht eines Spreizorgans, und
- Fig. 5: eine weitere Ansicht des Spreizorgans gemäss Fig. 4.

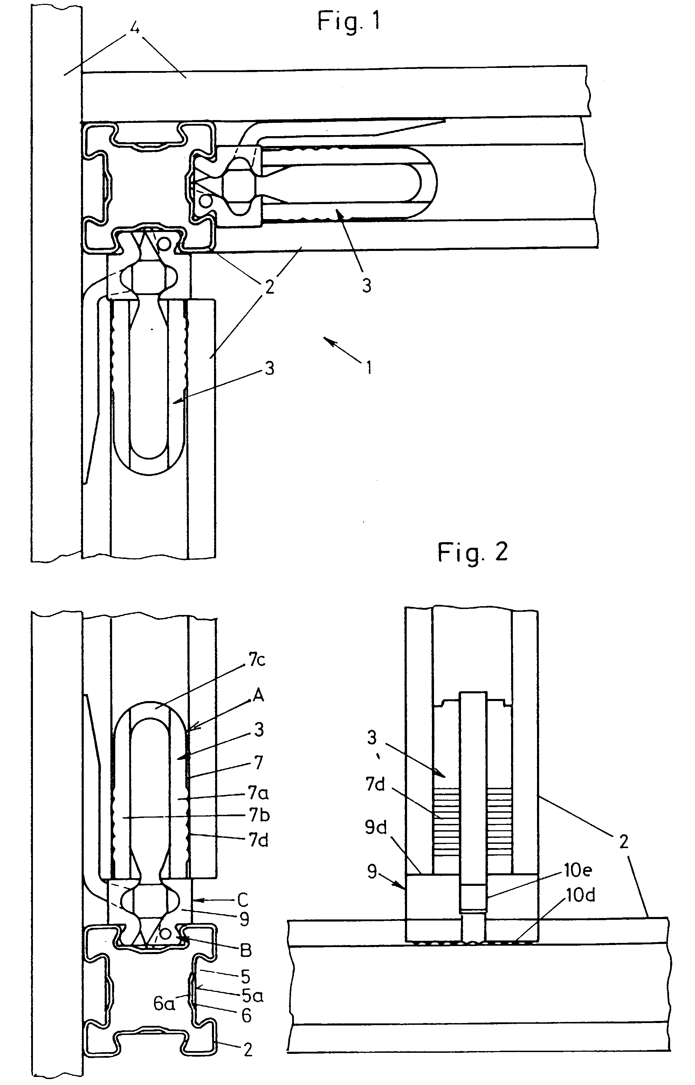

Die Figur 1 zeigt mehrere an sich bekannte Hohlprofilstangen 2, die mit Verbindern 3 lösbar zu einem Gestell verbunden sind, das mit Platten 4 abgedeckt ist. Am Gestell können hier nicht gezeigte Montageteile, beispielsweise Armaturenplatten angebracht sein. Das Gestell 1 ruht in der Regel auf einem Gebäudeboden und dient als Träger, beispielsweise für sanitäre Apparaturen.

Die beispielsweise aus Blech hergestellten Hohlprofilstangen 2 weisen einen quadratischen Querschnitt auf und besitzen vier sich über die gesamte Länge der Stange 2 erstrekkende Schwalbenschwanznuten 5. Diese Nuten 5 sind jeweils im Nutengrund 5a profiliert beispielsweise mit quer zur Längsrichtung der Stange erstreckende Rillen 6. Diese Rillen 6 sind durch Prägung hergestellt, so dass in einem Hohlraum 17 korrespondierende Rippen 6a vorhanden sind. Die Hohlprofilstangen 2 sind somit aussenseitig und innenseitig mit Profilierungen versehen. Sämtliche Stangen 2 des Gestells sind vorzugsweise gleich. Selbstverständlich können aber auch unterschiedliche Stangen sowie auch zusätzliche Tragteile vorgesehen sein.

Die Verbinder 3 sind ebenfalls vorzugsweise allesamt gleich ausgebildet.

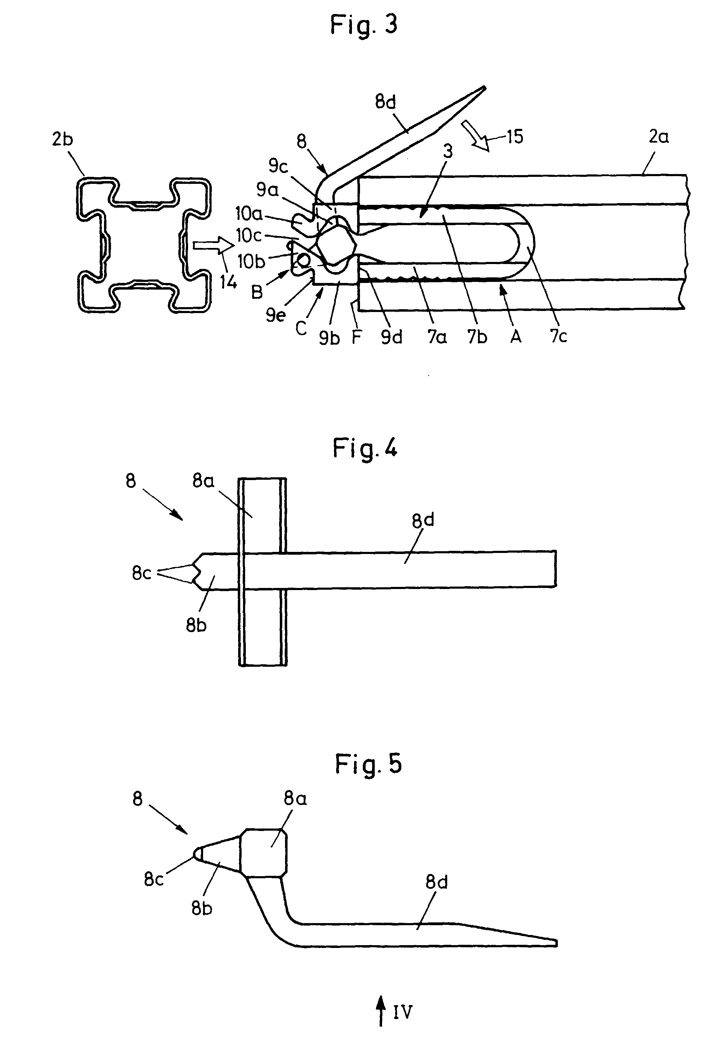

Die Verbinder 3 weisen jeweils ein Fussende A, ein Kopfende B sowie einen Spreizvorrichtung C auf. Das Fussende A wird durch zwei über einen Steg 7c elastisch miteinander verbundenen Schenkeln 7a und 7b gebildet. In der Ansicht gemäss Figur 3 ist das Fussende A U-förmig. Wie insbesondere Figur 2 zeigt, sind die Schenkel 7a und 7b aussenseitig mit Rillen 7d versehen, die korrespondierend zu den Rippen 6a ausgebildet sind. Das Fussende A ist so dimensioniert, dass es über seine gesamte Länge in einen stirnseitigen Hohlraum 17 einer Hohlprofilstange 2 eingesetzt und ohne Widerstand wieder herausgezogen werden kann. Vorzugsweise ist das Fussende A so dimensioniert, dass es ohne zusammendrücken der Schenkel 7a und 7b in den Hohlraum 17 eingesetzt werden kann.

Das Kopfende B weist zwei Rastnocken 10a und 10b auf, die durch einen schräg verlaufenden Schlitz 10c voneinander getrennt sind. Am Rastnocken 10b sind stirnseitig mehrere Zähne 10d angeformt, die korrespondierend zu den Rillen 6 ausgebildet sind.

Die Spreizvorrichtung C weist einen Spreizblock 9 aus zwei Abschnitten 9b und 9c der Schenkel 7a und 7b auf, die ebenfalls voneinander getrennt sind und zwischen denen ein unrunder Zwischenraum 9a für die Aufnahme eines Exzenterbolzens 8a eines Spreizorgans 8 angeordnet ist. Die Ausnehmung 9a ist mit dem Schlitz 10c verbunden. Der Exzenterbolzen 8a kann somit durch Spreizen der Schenkel 7a und 7b durch den Schlitz 10c in die Ausnehmung 9a lösbar eingesetzt werden. Er kann zudem durch einen angeformten Hebel 8d in der Ausnehmung 9a gedreht werden. Wie die Figuren 2 und 3 zeigen, ragt der Hebel 8d durch einen Schlitz 10e des Spreizblocks 9 durch diesen hindurch nach aussen.

Der Exzenterbolzen 8a ist im Querschnitt unrund, beispielsweise quadratisch, wie in der Zeichnung gezeigt. Die Ausnehmung 9a ist so ausgebildet, dass die Schenkel 7a und 7b sowie die Riegelnocken 10a und 10b dann die grösste Spreizung aufweisen, wenn der Hebel 8d wie in Figur 1 gezeigt in eine Nut 5 eingeschwenkt ist und somit parallel zur anliegenden Hohlprofilstange 2 verläuft.

Am Exzenterbolzen 8a ist eine Nase 8b angeformt, die stirnseitig wenigstens zwei Zähne 8c aufweist. Die Nase 8b ist gemäss Figur 4 wesentlich schmaler als der Exzenterbolzen 8a und erstreckt sich durch einen Schlitz 10e des Rastnokkens 10b hindurch bis zur Stirnseite des Riegelkörpers 7. Die Länge der Nase 8b ist so gross, dass bei eingeschwenktem Hebel 8d die Zähne 8c stirnseitig über die Riegelnase 10b hinausragen und in einer Linie mit den Zähnen 10d liegen. Der Exzenterbolzen 8a bildet mit dem Hebel 8d und der Nase 8b ein einstückiges Spreizorgan 8, das vorzugsweise aus einem geeigneten Metall als Gussteil hergestellt ist.

Anhand insbesondere der Figur 3 wird nachfolgend das Verbinden zweier Profilstangen 2a und 2b näher erläutert. Um die Profilstange 2a mit der quer zu dieser verlaufenden Profilstange 2b zu verbinden, wird ein Verbinder 3 zuerst mit dem Fussende A in einen stirnseitigen Hohlraum 17 der Profilstange 2a eingesetzt, bis eine Schulterfläche 9d des Spreizblocks 9 an der stirnseitigen Schnittfläche F der Hohlprofilstange 2a anliegt, wie dies in Figur 3 gezeigt ist. Der Verbinder 3 kann bezüglich seiner Längsachse in jeder der vier möglichen Drehlagen in den Hohlraum 17 eingesetzt werden. Hierbei ist der Hebel 8d ebenfalls wie gezeigt ausgeschwenkt. Nun wird die Hohlprofilstange 2b in Richtung des Pfeiles 14 auf das Kopfende B des Verbinders 3 aufgesetzt, bis diese an einer stirnseitigen Schulter 9e des Spreizblocks 9 flächig anliegt. Die Riegelnasen 10a und 10b sind dann vollständig in einer Nut 5 versenkt und die angeformten Zähne 10d greifen in Rillen 6 des Nutengrunds 5a ein. Anschliessend wird der Hebel 8 in Richtung des Pfeiles 15 verschwenkt, bis er in einer Nut 5 versenkt ist und seitlich somit nicht vorsteht. Während dieser Drehbewegung werden die Schenkel 7a und 7b sowie die Rastnocken 10a und 10b gespreizt und hierbei gegen die Innenseite des Hohlraumes 17 bzw. der Nut 5 gespannt. Mit dem Hebel 8d wird gleichzeitig die Nase 8b verschwenkt und die Zähne 8c in eine Linie mit den Zähnen 10d gebracht. Der Spreizbolzen 8a befindet sich dann in der in Figur 1 mehrfach gezeigten Position. Der Gegendruck der Abschnitte 9b und 9c lastet symmetrisch verteilt auf den vier Kanten des Spreizbolzens 8a. Dieser kann sich deshalb auch bei hohem Gegendruck von selbst nicht drehen.

Im gefügten Zustand ist der Verbinder 3 somit an seinem Fussende A durch die Profilierungen auf der Innenseite der Hohlprofilstange 2a und der Aussenseite der Schenkel 7a und 7b formschlüssig mit der Hohlprofilstange 2a verbunden. Ebenfalls eine formschlüssige Verbindung besteht zwischen der Hohlprofilstange 2b und dem Kopfende B durch die Zähne 10d des Riegelkörpers 7 und die Zähne 8c des Spreizorgans 8. Der Riegelkörper 7 bildet somit eine Klammer, welche die beiden Hohlprofilstangen 2a und 2b fest miteinander verbindet. Wesentlich ist insbesondere, dass das Fussende A in Längsrichtung der Hohlprofilstange 7a auch unter hoher Kraftaufwendung nicht herausgezogen werden kann und das Kopfende B entsprechend auch nicht in Längsrichtung der Hohlprofilstange 2b verschiebbar ist. Durch ein Ausschwenken des Hebels 8d kann das Fussende A und gleichzeitig das Kopfende B von der Hohlprofilstange 2a bzw. 2b gelöst werden. Im gelösten Zustand kann beispielsweise die Hohlprofilstange 2b in ihrer Längsrichtung verschoben werden. Beim Zurückschwenken des Hebels 8d in eine Nut 5 werden die Hohlprofilstangen 2a und 2b sofort wieder fest miteinander verbunden. Ein Lösen und Verbinden ist somit ohne Werkzeug sehr einfach und schnell möglich. Das Gestell lässt sich somit ohne Zusatzwerkzeug montieren. Ist das Gestell durch Platten 4 abgedeckt, so sind die Hebel 8d in der eingeschwenkten Position durch diese Platte 4 fixiert und damit die Verbindungen gesichert.

Trotz der erheblichen Vorteile des erfindungsgemässen Gestells ist dieses wie ersichtlich mit sehr wenigen, einfachen und robusten Bauteilen realisierbar, so dass erfindungsgemäss ein Gestell geschaffen wurde, welches nicht nur den sanitärtechnischen Anforderungen in hervorragender Weise Rechnung trägt, sondern aufgrund seiner einfachen und robusten Ausführbarkeit kostenmässig günstig und betrieblich äusserst zuverlässig ist.

## Patentansprüche

1. Gestell mit wenigstens zwei quer zueinander verlaufenden Hohlprofilstangen (2a,2b) und wenigstens einem Verbinder (3), der die beiden Hohlprofilstangen im Abstand zueinander verbindet und der einen Riegelkörper (7) sowie eine Spreizvorrichtung (C) aufweist, wobei der Riegelkörper (7) mit einem Kopfende (B) in eine hinterschnittene Nut (5) der einen Profilstange (2b) und mit einem Fussende (A) in einen stirnseitigen Hohlraum (17) der anderen Hohlprofilstange (2a) eingreift und wobei durch die Spreizvorrichtung (C) das Kopfende (B) und das Fussende (A) des Riegelkörpers (7) aufgespreizt gehalten sind, dadurch gekennzeichnet, dass der Riegelkörpers (7) klammerförmig ausgebildet ist und die Spreizvorrichtung (C) einen Exzenterbolzen (8a) aufweist, der zwischen den beiden Hohlprofilstangen (2a,2b) die beiden Schenkel (7a,7b) des Klammerförmigen Riegelkörpers (7) quer zu deren Längsrichtung aufspreizt und dadurch jeweils das Kopfende (B) und das Fussende (A) des Riegelkörpers (7) durch Klemmung lösbar mit der zugeordneten Hohlprofilstange (2a,2b) verbindet.

2. Gestell nach Anspruch 1, dadurch gekennzeichnet, dass der Riegelkörper (7) U-förmig ausgebildet ist und die beiden Schenkel (7a,7b) etwa parallel zueinander verlaufen und aussenseitig im Hohlraum (17) der aufnehmenden Hohlprofilstange (2a) an dieser angepresst sind.

3. Gestell nach Anspruch 1 oder 2, dadurch gekennzeichnet, dass die beiden Schenkel (7a,7b) aussenseitig eine Profilierung aufweisen und diese mit einer korrespondierenden Profilierung im Hohlraum (17) der aufnehmenden Hohlprofilstange (2a) in Eingriff ist.

4. Gestell nach einem der Ansprüche 1 bis 3, dadurch gekennzeichnet, dass der Riegelkörper (7) zwischen dem Fussende (A) und dem Kopfende (B) einen Spreizblock (9) aufweist, in welchem der Exzenterbolzen (8a) drehbar gelagert ist und der Spreizblock (9) durch Abschnitte (9b,9c) der beiden Schenkel (7a,7b) gebildet ist.

5. Gestell nach Anspruch 4, dadurch gekennzeichnet, dass der Spreizblock (9) im Abstand zueinander zwei quer zur Längsrichtung der Schenkel (7a,7b) verlaufende Schultern (9d,9e) aufweist, an welche jeweils eine Hohlprofilstange (2a,2b) angelegt ist.

6. Gestell nach Anspruch 5, dadurch gekennzeichnet, dass die Schultern (9d,9e) zueinander einen Abstand aufweisen, der im wesentlichen dem Durchmesser des Exzenterbolzens (8a) entspricht.

7. Gestell nach einem der Ansprüche 1 bis 6, dadurch gekennzeichnet, dass der Exzenterbolzen (8a) eine Nase (8b) aufweist, die sich wenigstens bis zur Stirnseite des Kopfendes (B) erstreckt und zur Fixierung des Verbinders mit einer Profilierung der aufnehmenden Hohlprofilstange (2b) in Eingriff ist.

8. Gestell nach Anspruch 7, dadurch gekennzeichnet, dass die Nase (8b) Vorsprünge (8c) aufweist, die formschlüssig mit einer Profilierung (6) in einer Nut (5) der aufnehmenden Hohlprofilstange (2b) in Eingriff ist.

9. Gestell nach einem der Ansprüche 1 bis 8, dadurch gekennzeichnet, dass am Exzenterbolzen (8a) ein Hebel (8d) angebracht ist, der in eine Nut (5) einer Hohlprofilstange (2a) eingeschwenkt ist.

10. Gestell nach einem der Ansprüche 7 bis 9, dadurch gekennzeichnet, dass die Nase und/oder der Hebel (8d) am Exzenterbolzen (8a) angeformt sind.

11. Gestell nach einem der Ansprüche 1 bis 10, dadurch gekennzeichnet, dass der Exzenterbolzen (8a) einen mehreckigen, vorzugsweise viereckigen Querschnitt aufweist.

12. Gestell nach Anspruch 11, dadurch gekennzeichnet, dass der Riegelkörper (7) eine unrunde Ausnehmung (9a) aufweist, deren Grenzflächen an mehreren symmetrisch verteilten Stellen am Exzenterbolzen (8a) anliegen.

13. Gestell nach Anspruch 12, dadurch gekennzeichnet, dass die Ausnehmung (9a) zum Kopfende (B) hin mit einem Schlitz (10c) im Kopfende (B) geöffnet ist und dass der Exzenterbolzen (8a) durch diesen Schlitz (10c) in die Ausnehmung (9a) eingesetzt ist.

14. Gestell nach einem der Ansprüche 1 bis 13, dadurch gekennzeichnet, dass der Exzenterbolzen (8a) im wesentlichen einen quadratischen Querschnitt aufweist.

15. Verbinder für ein Gestell nach Anspruch 1, dadurch gekennzeichnet, dass er lediglich aus dem Riegelkörper (7) und dem Exzenterbolzen (8a) mit angeformtem Hebel (8d) und angeformter Nase (8b) besteht und dass der Riegelkörper (7) ein einstückiges Gussteil ist.

## Claims

1. Frame having at least two hollow-section bars (2a, 2b) extending at right angles to one another and having at least one connector (3), which connects the two hollow-section bars so that they are at a distance from one another and which has a locking body (7) and an expanding means (C), whereby the top end (B) of the locking body (7) engages in an undercut groove (5) of one (2b) of the hollow-section bars and the bottom end (A) of the locking body engages in an end-face cavity (17) of the other hollow-section bar (2a) and whereby the top end (B) and the bottom end (A) of the locking body (7) are kept expanded by the expanding means (C), characterized in that the locking body (7) is configured in a clamp shape and the expanding means (C) has a cam pin (8a) which forces out, between the two hollow-section bars (2a, 2b), the two arms (7a, 7b) of the clamp-shaped locking body (7) transverse to their longitudinal direction and, by this means, clamps the top end (B) and the bottom end (A) of the locking body (7) to their respective hollow-section bars (2a, 2b) in a detachable manner.

2. Frame according to Claim 1, characterized in that the locking body (7) is of U-shaped configuration and the two arms (7a, 7b) extend approximately parallel to one another and, within the cavity (17) of the hollow-section bar (2a) accommodating the two arms (7a, 7b), are pressed on the outside onto the hollow-section bar (2a).

3. Frame according to Claim 1 or 2, characterized in that the two arms (7a, 7b) have profiling on the outside and this profiling is in engagement with a corresponding profiling in the cavity (17) of the hollow-section bar (2a) which accommodates them.

4. Frame according to one of Claims 1 to 3, characterized in that between its bottom end (A) and its top end (B), the locking body (7) has an expanding block (9) in which the cam pin (8a) is rotatably supported and in that the expanding block (9) is formed by sections (9b, 9c) of the two arms (7a, 7b).

5. Frame according to Claim 4, characterized in that the expanding block (9) has two shoulders (9d, 9e) at a distance from one another and extending at right angles to the longitudinal direction of the arms (7a, 7b), a hollow-section bar (2a, 2b) being respectively in contact with each of these shoulders (9d, 9e).

6. Frame according to Claim 5, characterized in that the shoulders (9d, 9e) have a distance apart which substantially corresponds to the diameter of the cam pin (8a).

7. Frame according to one of Claims 1 to 6, characterized in that the cam pin (8a) has a nose (8b) which extends at least as far as the end face of the top end (B) and is in engagement with profiling of the hollow-section bar (2b) accommodating the top end (B) in order to fix the connector.

8. Frame according to Claim 7, characterized in that the nose (8b) has protrusions (8c) which are in positive engagement with profiling (6) in a groove (5) of the hollow-section bar (2b) accommodating the top end (B).

9. Frame according to one of Claims 1 to 8, characterized in that a lever (8d), which is pivoted into a groove (5) of one of the hollow-section bars (2a), is attached to the cam pin (8a).

10. Frame according to one of Claims 7 to 9, characterized in that the nose and/or the lever (8d) is formed on the cam pin (8a).

11. Frame according to one of Claims 1 to 10, characterized in that the cam pin (8a) has a polygonal, preferably rectangular cross-section.

12. Frame according to Claim 11, characterized in that the locking body (7) has a non-circular recess (9a) whose boundary surfaces are in contact with the cam pin (8a) at a number of symmetrically distributed points.

13. Frame according to Claim 12, characterized in that the recess (9a) is open towards the top end (B) by means of a slot (10c) in the top end (B) and in that the cam pin (8a) is inserted into the recess (9a) through the slot (10c).

14. Frame according to one of Claims 1 to 13, characterized in that the cam pin (8a) has a substantially square cross-section.

15. Connector for a frame according to Claim 1, characterized in that it consists only of the locking body (7) and the cam pin (8a) with the lever (8d) formed on it and the nose (8b) formed on it and in that the locking body (7) is a single-piece casting.

## Revendications

1. Structure comportant au moins deux barres profilées creuses perpendiculaires (2a,2b) et au moins un élément de liaison (3), qui relie entre elles les deux barres profilées creuses à distance l'une de l'autre et comporte un organe de verrouillage (7) ainsi qu'un dispositif d'écartement (C), et dans laquelle l'organe de verrouillage (7) s'engage par une extrémité de tête (B) dans une rainure en contre-dépouille (5) d'une barre profilée (2b) et par une extrémité formant pied (A) dans une cavité frontale (17) de l'autre barre profilée creuse (2a) et dans laquelle l'extrémité de tête (B) et l'extrémité de pied (A) de l'organe de verrouillage (7) sont maintenues écartées au moyen du dispositif d'écartement (C), caractérisée en ce que l'organe de verrouillage (7) est agencé sous la forme d'une pince et que le dispositif d'écartement (C) possède un boulon d'excentrique (8a), qui, entre les deux barres profilées creuses (2a,2b), écarte les deux branches (7a,7b) de l'organe de verrouillage en forme de pince (7) transversalement par rapport à sa direction longitudinale et relie de ce fait respectivement l'extrémité de tête B et l'extrémité de pied (A) de l'organe de verrouillage (7) d'une manière amovible, par serrage, à la barre profilée creuse associée (2a,2b).

2. Structure selon la revendication 1, caractérisée en ce que l'organe de verrouillage (7) est agencé en forme de U et que les deux branches (7a,7b) sont approximativement parallèlement et sont repoussées, côté extérieur, contre la barre profilée creuse de réception (2a), dans la cavité (17) de cette barre.

3. Structure selon la revendication 1 ou 2, caractérisée en ce que les deux branches (7a,7b) possèdent extérieurement un profil et que ce dernier engrène avec un profil correspondant dans la cavité (17) de la barre profilée creuse de réception (2a).

4. Structure selon l'une des revendications 1 à 7, caractérisée en ce que l'organe de verrouillage (7) comporte entre l'extrémité de pied (A) et l'extrémité de tête (B), un bloc d'écartement (9), dans lequel le boulon d'excentrique (8a) est monté de manière à pouvoir tourner, et le bloc d'écartement (9) est formé par des sections (9b,9c) des deux branches (7a,7b).

5. Structure selon la revendication 4, caractérisée en ce que le bloc d'écartement (9) comporte deux épaulements (9d,9e), qui sont distants l'un de l'autre et s'étendent transversalement par rapport à la direction longitudinale des branches (7a,7b) et sur lesquels est appliquée respectivement une barre profilée creuse (2a,2b).

6. Structure selon la revendication 5, caractérisée en ce que les épaulements (9d,9e) sont séparés par une distance qui correspond essentiellement au diamètre du boulon d'excentrique (8a).

7. Structure selon l'une des revendications 1 à 6, caractérisée en ce que le boulon d'excentrique (8a) possède un bec (8b), qui s'étend au moins jusqu'à la face frontale de l'extrémité de tête (B) et, pour la fixation de l'organe de liaison, engrène avec un profil de la barre profilée creuse de réception (2b).

8. Structure selon la revendication 7, caractérisée en ce que le bec (8b) comporte des parties saillantes (8c) qui engrènent selon une liaison par formes complémentaires avec un profil (6) situé dans une rainure (5) de la barre profilée creuse de réception (2b).

9. Structure selon l'une des revendications 1 à 8, caractérisée en ce que sur le boulon d'excentrique (8a) est disposé un levier (8d), qui est amené par basculement dans une rainure (5) d'une barre profilée creuse (2a).

10. Structure selon l'une des revendications 7 à 9, caractérisée en ce que le bec et/ou le levier (8d) sont formés sur le boulon d'excentrique (8a).

11. Structure selon l'une des revendications 1 à 10, caractérisée en ce que le boulon d'excentrique (8a) possède une section transversale polygonale, de préférence carrée.

12. Structure selon la revendication 11, caractérisée en ce que l'organe de verrouillage (7) comporte une ouverture non circulaire (9a), dont les surfaces limites s'appliquent sur le boulon d'excentrique (8a) en plusieurs emplacements répartis de façon symétrique.

13. Structure selon la revendication 12, caractérisée en ce que l'évidement (9a) est ouvert en direction de l'extrémité de tête (B), dans laquelle est formée une fente (10c) et que le boulon d'excentrique (8a) est introduit à travers cette fente (10c) dans l'évidement (9a).

14. Structure selon l'une des revendications 1 à 13, caractérisée en ce que le boulon d'excentrique (8a) possède essentiellement une section transversale carrée.

15. Élément de liaison pour une structure selon la revendication 1, caractérisé en ce qu'il est constitué uniquement par un organe de verrouillage (7) et par le boulon d'excentrique (8a) sur lequel sont formés le levier (8d) et un bec (8b), et que l'organe de verrouillage (7) est une pièce coulée monobloc.
